# EUROPEAN PATENT APPLICATION

(11) **EP 3 438 953 A1**
(43) Date of publication of application: **06.02.2019**
(21) Application number: 16897115.8
(22) Date of filing: 27.12.2016
(51) Int. Cl.: G09B 29/00, G01C 21/30, G09B 29/10

(54) **INFORMATION PROCESSING DEVICE**

(30) Priority: 31.03.2016 JP 2016070596
(71) Applicant: Sony Corporation, Tokyo 108-0075 (JP)
(72) Inventor: FUKUI, Akira, Tokyo 108-0075 (JP)
(74) Representative: MFG Patentanwälte Meyer-Wildhagen Meggle-Freund Gerhard PartG mbB
(86) International application number: PCT/JP2016/088891
(87) International publication number: WO 2017/168900

(57) **Abstract**

[Object] To dynamically update map information in response to change in the real world, with higher accuracy.

[Solution] Provided is an information processing device including: an acquisition section configured to acquire observation information related to a unit space in a real world, from one or a plurality of sensors; and a communication section configured to transmit the observation information acquired in the unit space, on a basis of information related to inconsistency between a reference map and the unit space in the real world. In addition, provided is an information processing device including: a communication section configured to receive observation information related to a unit space in a real world, the observation information being acquired from one or a plurality of sensors; and a map generation section configured to generate a reference map on a basis of the observation information. The observation information is transmitted on a basis of information related to inconsistency between the reference map and the unit space in the real world.

## Description

### Technical Field

The present disclosure relates to an information processing device.

### Background Art

In recent years, various kinds of services using map information have been proposed. In addition, various kinds of methods for updating the map information on the basis of information observed in a real world have also been proposed. Examples of such methods include a map data updating method described in Patent Literature 1.

### Citation List

### Patent Literature

Patent Literature 1: JP 2005-98853A

### Disclosure of Invention

### Technical Problem

However, the map data updating method disclosed in Patent Literature 1 is limited to update of information related to roads on which vehicles travel. In addition, it is difficult to reflect detected change on landforms in the real world, in the map data by using the map data updating method described in Patent Literature 1.

Accordingly, the present disclosure proposes an information processing device capable of dynamically updating map information in response to change in the real world, with higher accuracy.

### Solution to Problem

According to the present disclosure, there is provided an information processing device including: an acquisition section configured to acquire observation information related to a unit space in a real world, from one or a plurality of sensors; and a communication section configured to transmit the observation information acquired in the unit space, on a basis of information related to inconsistency between a reference map and the unit space in the real world.

In addition, according to the present disclosure, there is provided an information processing device including: a communication section configured to receive observation information related to a unit space in a real world, the observation information being acquired from one or a plurality of sensors; and a map generation section configured to generate a reference map on a basis of the observation information. The observation information includes information related to inconsistency between the reference map and the unit space in the real world.

In addition, according to the present disclosure, there is provided an information processing device including: a reception section configured to receive information related to inconsistency between a reference map and a unit space in a real world; and a control section configured to change a driving control mode on a basis of a degree of the inconsistency.

### Advantageous Effects of Invention

As described above, according to the present disclosure, it is possible to dynamically update map information in response to change in the real world, with higher accuracy. Note that the effects described above are not necessarily limitative. With or in the place of the above effects, there may be achieved any one of the effects described in this specification or other effects that may be grasped from this specification.

### Brief Description of Drawings

[FIG. 1A] FIG. 1A is a schematic diagram related to an environment around an autonomous vehicle according to the present disclosure.
[FIG. 1B] FIG. 1B is an illustration diagram of an ambient environment recognized by the autonomous vehicle according to the present disclosure.
[FIG. 2A] FIG. 2A is an example diagram related to inconsistency between a reference map and a real world according to the present disclosure.
[FIG. 2B] FIG. 2B is an example diagram related to the inconsistency between the reference map and the real world according to the present disclosure.
[FIG. 3] FIG. 3 is a conceptual diagram illustrating update of a reference map according to an embodiment.
[FIG. 4] FIG. 4 is a system configuration example according to the embodiment.
[FIG. 5] FIG. 5 is a functional block diagram of an information processing server and an information processing device according to the embodiment.
[FIG. 6] FIG. 6 is a flowchart illustrating a workflow of consistency determination according to the embodiment.
[FIG. 7] FIG. 7 is a conceptual diagram illustrating input/output related to the consistency determination according to the embodiment.
[FIG. 8] FIG. 8 is a flowchart illustrating a workflow of new partial map generation according to the embodiment.
[FIG. 9] FIG. 9 is a flowchart illustrating a workflow of command transmission based on inconsistency prediction according to the embodiment.
[FIG. 10] FIG. 10 is a conceptual diagram illustrating input/output related to three-dimensional map generation according to the embodiment.
[FIG. 11A] FIG. 11A is an illustration diagram of an object included in a primary map according to the embodiment.
[FIG. 11B] FIG. 11B is an illustration diagram of a segmentation process and object surface generation according to the embodiment.
[FIG. 11C] FIG. 11C is an illustration diagram of texture projection according to the embodiment.
[FIG. 12] FIG. 12 is an illustration diagram of an object-attribute-added map according to the embodiment.
[FIG. 13] FIG. 13 is a hardware configuration example according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, the description is given in the following order.
1. Background related to present disclosure
   1.1 Artificial neural network
   1.2. Driving control using artificial neural network
   1.3. Reference map related to automated driving control
2. Embodiment
   2.1. Overview of reference map update
   2.2. System configuration example according to present embodiment
   2.3. Information processing server 10 according to present embodiment
   2.4. Information processing device 20 according to present embodiment
   2.5. Workflow of consistency determination by information processing device 20
   2.6. Details of consistency determination
   2.7. Workflow related to generation of new partial map
   2.8. Command transmission based on inconsistency prediction
   2.9. Driving control based on inconsistency prediction
   2.10 Details of three-dimensional map generation
   2.11 Object-surface-generated map and texture-projected map
   2.12. Object-attribute-added map according to present embodiment
3. Hardware configuration example
4. Conclusion

### <1. Background related to present disclosure>

### «1.1. Artificial neural network»

The artificial neural network is a model that simulates a human neural network. The artificial neural network is a technique of causing a computer to achieve human learning abilities. As described above, one of features of the artificial neural network is that the artificial neural network has the learning ability. In the artificial neural network, artificial neurons (nodes) constitute the network through synaptic connections, and the artificial neurons (nodes) change strength of the synaptic connections through learning. Therefore, it is possible to acquire an ability to solve problems. In other words, the artificial neural network becomes capable of automatically inferring a rule of a solution to a problem through a number of times of learning.

Examples of the learning by the artificial neural network include image recognition and speech recognition. For example, the artificial neural network becomes capable of recognizing an object and the like included in an input image by repeatedly learning input image patterns. Such a learning ability of the artificial neural network has also attracted attention as a key to enhance progress in artificial intelligence. In addition, the learning ability of the artificial neural network is also expected to be applied in various kinds of industrial fields. Examples of the application of the learning ability of the artificial neural network include autonomous control of various devices.

### <<1.2. Driving control using artificial neural network>>

Here, an example of autonomous control using an artificial neural network will be described. In recent years, various kinds of devices that autonomously operate without user manipulation have been developed. Examples of such a device include an autonomous vehicle that does not have to be controlled by a driver. The autonomous vehicle recognizes an ambient environment from information acquired by various sensors, and achieves autonomous traveling in accordance with the recognized environment.

The artificial neural network can be applied to such environment recognition and driving control in the autonomous vehicle. For example, a learner (hereinafter, also referred as AI for automated driving) may be used for the automated driving control. The learner has acquired a driving control function through deep learning using a multi-layer artificial neural network. In other words, the AI for automated driving is capable of controlling driving of a vehicle in accordance with an ambient environment on the basis of an environment recognition ability and a driving control ability acquired through learning. For example, the AI for automated driving is capable of recognizing pedestrians on the basis of observation information observed by sensors, and controlling a steering wheel and a brake to avoid the pedestrians.

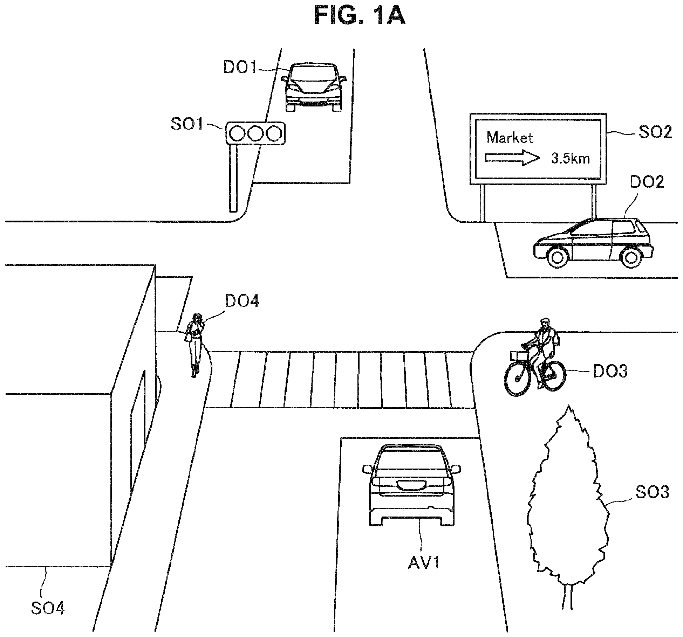

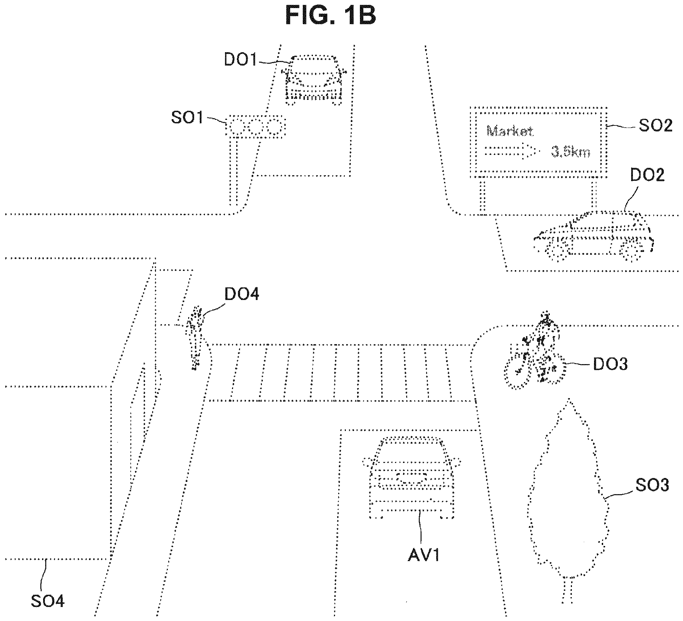

FIG. 1A and FIG. 1B are diagrams illustrating recognition of an ambient environment by an autonomous vehicle AV1. FIG. 1A is a diagram schematically illustrating an environment around an autonomous vehicle AV1 in a real world. With reference to FIG. 1A, there are dynamic objects DO1 to DO4 and static objects SO1 to SO4 around the autonomous vehicle AV1. Here, the dynamic objects DO1 to DO4 may be objects that dynamically move. In the example illustrated in FIG. 1A, the dynamic objects DO1 and DO2 are illustrated as vehicles, the dynamic object DO3 is illustrated as a bicycle, and the dynamic object DO4 is illustrated as a pedestrian. In addition, the static objects SO1 to SO4 may be objects that do not autonomously move. In the example illustrated in FIG. 1A, the static object SO1 is illustrated as a traffic light, the static object SO2 is illustrated as a billboard, the static object SO3 is illustrated as a street tree, and the static object SO4 is illustrated as a building.

Next, with reference to FIG. 1B, an example of an ambient environment recognized by the autonomous vehicle AV1 will be described. FIG. 1B is a diagram schematically illustrating an ambient environment recognized by the autonomous vehicle AV1. As illustrated in FIG. 1B, for example, the autonomous vehicle AV1 may recognize an ambient environment by using feature points extracted on the basis of observation information including image information. Therefore, in FIG. 1B, the dynamic objects DO1 to DO4 and the static objects SO1 to SO4 are represented by respective sets of feature points detected by the autonomous vehicle AV1. As described above, the autonomous vehicle AV1 is capable of recognizing its ambient environment by tracking feature points of objects detected on the basis of information obtained from a camera or the like mounted on the autonomous vehicle AV1.

In addition, although it is not illustrated in FIG. 1B, the autonomous vehicle AV1 is also capable of recognizing the ambient environment on the basis of a result of object recognition performed by the AI for automated driving. In this case, for example, the dynamic objects DO1 to DO4 may be recognized as three-dimensional information based on recognition of respective feature points and objects. In addition, the AI for automated driving is capable of controlling driving in accordance with characteristics of the object in the ambient environment recognized from the observation information. For example, the AI for automated driving may control an accelerator pedal, a brake, a steering wheel, and the like while recognizing a driving path of an oncoming vehicle, pedestrians who are crossing a road, or the like.

### <<1.3. Reference map related to automated driving control>>

As described above, an autonomous vehicle provided with the AI for automated driving is capable of travelling autonomously while recognizing an ambient environment on the basis of observation information acquired from a sensor such as a camera or the like mounted on the autonomous vehicle. In addition, in the above-described automated driving control, it is possible to achieve highly accurate driving control by using a three-dimensional map (hereinafter, also referred to as a reference map) as a reference of an ambient environment. In other words, the autonomous vehicle is capable of improving accuracy of ambient environment recognition and self-localization, by referring to the reference map and matching the observation information against the reference map. Here, the reference map may be a three-dimensional map generated from a plurality of pieces of observation information including image information, for example.

On the other hand, the accuracy of the reference map is important in the case of using the reference map for the automated driving control. For example, in the case where there is inconsistency between the reference map and a landform in the real world, there is a possibility of drastically deteriorating accuracy of self-localization and object recognition performed by the autonomous vehicle.

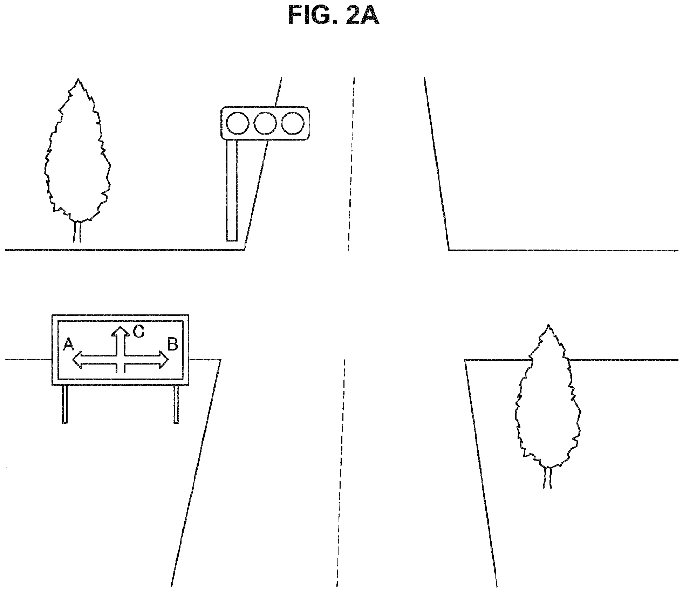

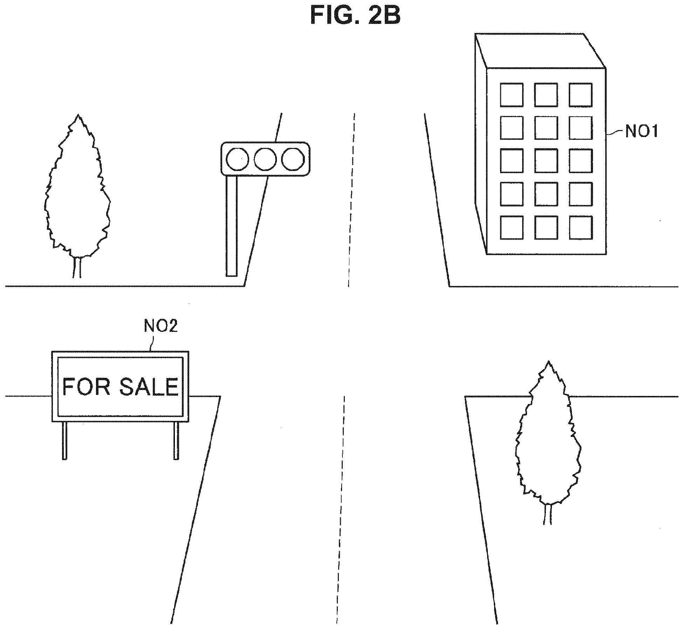

FIG. 2A and FIG. 2B are diagrams illustrating the inconsistency between the reference map and the landform in the real world. Note that, the landform may include various kinds of static objects in the real world, in addition to landforms including ground and roads.

FIG. 2A is an illustration diagram of a three-dimensional map of a predetermined unit space stored in the reference map. With reference to FIG. 2A, the reference map includes three-dimensional position information of static objects including a traffic light, a billboard, and the like in addition to road information.

In addition, FIG. 2B is an illustration diagram illustrating a landform in a unit space in the real world. The unit space is the same as the reference map illustrated in FIG. 2A. With reference to FIG. 2B, it is understood that there is inconsistency between the landform in the real world and the reference map illustrated in FIG. 2A. Specifically, a building NO1, which is not on the reference map, is newly constructed on the landform in the real world. In addition, a billboard NO2 displays content different from a corresponding billboard illustrated in the reference map.

As described above, the landforms change in the real world. There is a possibility that inconsistency between the real world and the reference map occurs as time passes from creation of the reference map. In addition, there is a possibility that the self-localization goes wrong when the autonomous vehicle refers to a reference map that does not comply with the real world.

Therefore, it is necessary to appropriately update the reference map in accordance with change in landforms in the real world. Especially, in the case where the reference map is used for automated driving control, the reference map is expected to comply with the real world and have higher accuracy in view of safety assurance.

The information processing device 20 and the information processing server 10 according to the present disclosure have been made in view of update of a reference map as described above. They are capable of detecting change in the real world more efficiently, and keeping the reference map in a state closer to the real world situation. Hereinafter, functional features of the information processing device 20 and the information processing server 10 according to the present disclosure, and effects achieved by the features will be described. In addition, learning using an artificial neural network will be mainly described in the present disclosure. However, the learning method according to the present disclosure is not limited thereto. The technical ideas according to the present disclosure can be applied to every learner configured to find a law from a relation between input and output.

In addition, hereinafter, an autonomous vehicle configured to travel in the real world is used as an example. However, application of the information processing server 10 and the information processing device 20 according to the present disclosure is not limited thereto. It is also possible to apply the information processing server 10 and the information processing device 20 according to the present disclosure, to a specialized vehicle configured to travel indoors, a rescue robot configured to operate in a disaster site, and the like. In other words, a technology of generating a reference map according to the present disclosure achieves effects that are useful both indoors and outdoors. In addition, the observation information according to the present disclosure may be collected by a mobile object corresponding to an environmental situation.

### <2. Embodiment>

### <<2.1. Overview of reference map update>>

First, an overview of update of a reference map according to the present embodiment will be described. When updating the reference map according to the present embodiment, the information processing device 20 mounted on an autonomous vehicle or the like is capable of detecting inconsistency between the reference map and the real world, and transmitting observation information observed in a unit space where the inconsistency is detected, to the information processing server 10. In addition, the information processing server 10 according to the present embodiment is capable of issuing a command that requests the observation information related to the unit space where the inconsistency is detected on the basis of information related to the inconsistency transmitted from the information processing device 20, and transmitting the command to a plurality of information processing devices 20.

On the other hand, the information processing devices 20 that have received the command are capable of guiding or moving mobile objects such as vehicles to a designated unit space, and transmitting pieces of observation information observed in the unit space to the information processing server 10. On the basis of the plurality of pieces of observation information acquired from the information processing devices 20, the information processing server 10 generates a new three-dimensional partial map, and updates the reference map related to the target unit space.

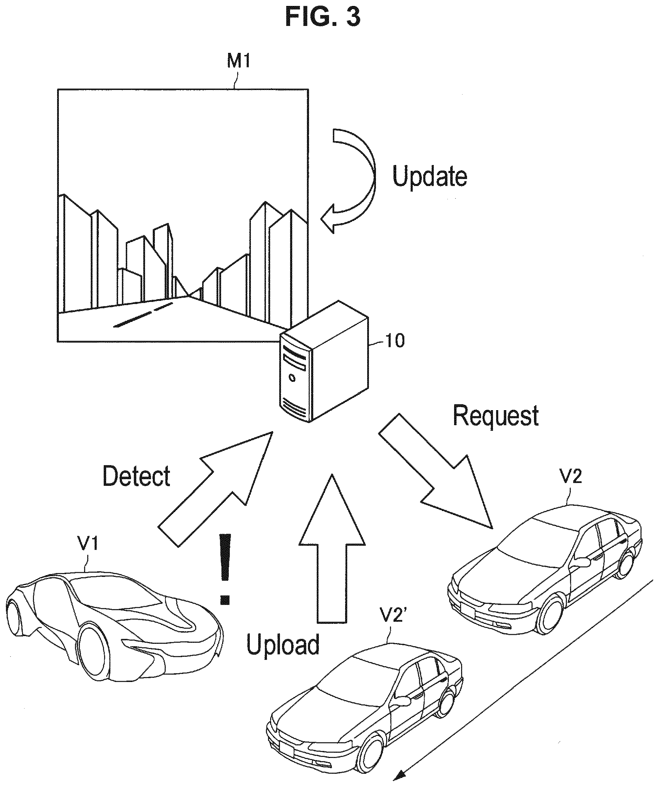

FIG. 3 is a conceptual diagram related to the reference map update according to the present embodiment. FIG. 3 shows the information processing server 10, a vehicle VI, and a vehicle V2. The vehicles V1 and V2 are provided with the information processing devices 20. In addition, a map M1 illustrated in FIG. 3 is an image of a reference map related to a unit space.

The vehicle V1 provided with the information processing device 20 may be a vehicle that travels while observing landforms in the real world, such as an autonomous vehicle or the like. At this time, the vehicle V1 travels in the real world while matching an ambient environment recognized on the basis of acquired observation information, against a reference map. Here, in the case where inconsistency between the real world and the reference map is detected, the information processing device 20 mounted on the vehicle V1 transmits observation information observed in the unit space to the information processing server 10.

Next, the information processing server 10 that has received information related to the inconsistency issues a command that requests observation information from the plurality of information processing devices 20. The observation information relates to the unit space where the inconsistency is detected. Here, the information processing devices 20 may be vehicle-mounted systems such as the AI for automated driving or car navigation systems. In the case where the information processing device 20 is the AI for automated driving, the information processing device 20 moves the vehicle V2 to a target unit space on the basis of the received command. Alternatively, in the case where the information processing device 20 is the car navigation system, the information processing device 20 may change a route or the like for guiding the vehicle V2 to the target unit space.

When the vehicle V2 is moved to the designated unit space under the above-described control, the information processing device 20 transmits an acquired piece of observation information to the information processing server 10. On the basis of pieces of observation information acquired from the plurality of information processing devices 20, the information processing server 10 generates a new three-dimensional partial map related to the unit space, and updates the reference map. Note that, the vehicle V2 and a vehicle V2' in the example illustrated in FIG. 2 indicate the same vehicle. The vehicle V2' represents the vehicle V2 after moving to the designated unit space.

The overview of update of a reference map according to the present embodiment has been described. By using the information processing device 20 and the information processing server 10 according to the present embodiment, it is possible to dynamically detect inconsistency between the real world and a reference map on the basis of observation information observed by a mobile object traveling in the real world. In addition, according to the present embodiment, it is possible to effectively acquire observation information in a unit space expected to have inconsistency, and update a reference map.

Note that, the vehicle has been used as an example of the mobile object provided with the information processing device 20 in the above description. However, the mobile object according to the present disclosure is not limited thereto. The mobile object according to the present embodiment may be an unmanned aerial vehicle (UAV) including a drone, a ship, or various robots, for example. Alternatively, the mobile object according to the present embodiment may be various vehicles or devices operated by humans. In this case, for example, the information processing server 10 according to the present embodiment is capable of collecting observation information observed by a vehicle driven by a human or a drone operated by a human. The mobile object according to the present embodiment may be widely applied as a means for observing an ambient environment, or a device including a means for moving to a designated space area.

### <<2.2. System configuration example according to present embodiment>>

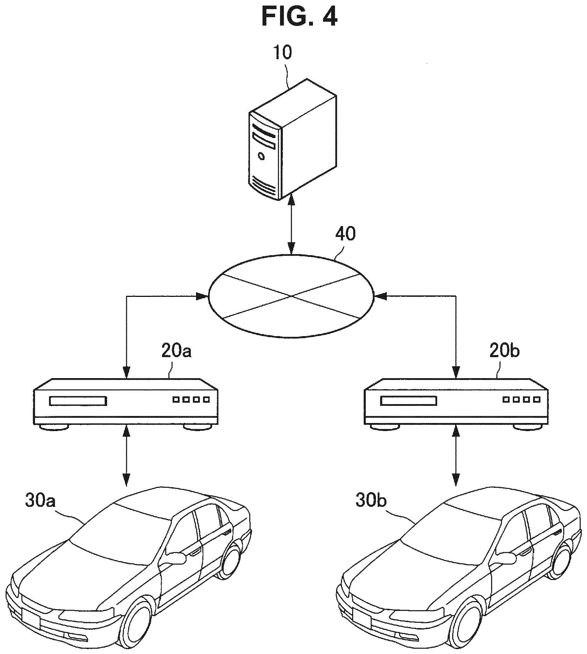

Next, a system configuration example according to the present embodiment will be described. With reference to FIG. 4, a system according to the present embodiment includes an information processing server 10, a plurality of information processing devices 20a and 20b, and a plurality of mobile objects 30a and 30b. In addition, the information processing server 10, the information processing device 20a, and the information processing device 20b are connected to each other via a network 40 such that they can communicate with each other.

Here, the information processing server 10 according to the present embodiment is an information processing device configured to generate a command that requests observation information related to a unit space in the real world on the basis of information related to inconsistency, and transmit the command to at least one information processing device 20. In addition, the information processing server 10 has a function of updating a reference map on the basis of received observation information.

In addition, the information processing device 20 according to the present embodiment is a device configured to transmit observation information acquired in a unit space to the information processing server 10, on the basis of information related to inconsistency between a reference map and the unit space in the real world. For example, the information processing device 20 may be AI for automated driving, a car navigation system, a personal computer (PC), a tablet, a smartphone or the like.

In addition, the information processing devices 20 according to the present embodiment may be different kinds of devices. For example, the information processing device 20a illustrated in FIG. 4 may be the AI for automated driving, and the information processing device 20b may be the car navigation system. The information processing devices 20 according to the present embodiment may be various information processing devices each of which has a function of acquiring observation information from a mobile object 30, and a function of setting a destination of the mobile object 30 on the basis of a command from the information processing server 10.

The mobile object 30 according to the present embodiment may be a device including various sensors configured to observe landform information of the real world. For example, the mobile objects 30 may be various vehicles including the autonomous vehicle, an unmanned aerial vehicle, a ship, or a rescue robot. In addition, the mobile object 30 according to the present embodiment may be a drone or a vehicle for collecting data such as the observation information. The mobile object 30 according to the present embodiment has a function of delivering observation information observed in a real world to the information processing devices 20. Here, the observation information may include information acquired by an RGB-D camera, a laser rangefinder, GPS, Wi-Fi (registered trademark), a geomagnetic sensor, a barometric sensor, an acceleration sensor, a gyro sensor, a vibration sensor, or the like, for example.

In addition, the network 40 includes a function of connecting the information processing server 10 and the information processing devices 20. The network 40 may include a public network such as the Internet, a telephone network, and a satellite communication network, various local area networks (LANs) including Ethernet (registered trademark), a wide area network (WAN), and the like. In addition, the network 40 may include a dedicated network such as an internet protocol-virtual private network (IP-VPN).

The system configuration example according to the present embodiment has been described above. Next, features of functional configurations of the information processing server 10 and the information processing devices 20 according to the present embodiment will be described.

### <<2.3. Information processing server 10 according to present embodiment>>

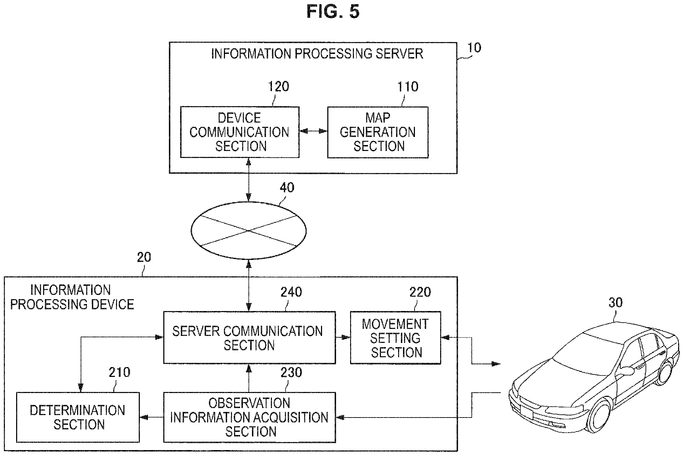

Next, details of the information processing server 10 according to the present embodiment will be described. The information processing server 10 according to the present embodiment is an information processing device having a function of updating a reference map on the basis of observation information acquired in a unit space in the real world, the observation information being received from the information processing device 20. In addition, the information processing server 10 has a function of requesting the observation information from the plurality of information processing devices 20. FIG. 5 is a functional block diagram of the information processing server 10 and the information processing device 20 according to the embodiment. With reference to FIG. 5, the information processing server 10 according to the present embodiment includes a map generation section 110 and a device communication section 120.

### (Map generation section 110)

The map generation section 110 has a function related to generation of a reference map. The reference map may be a three-dimensional map, for example. Especially, in the present embodiment, the map generation section 110 may have a function of generating a reference map on the basis of observation information received by the device communication section 120 (to be described later). Specifically, the map generation section 110 may generate a new three-dimensional map on the basis of the observation information and update the reference map. In addition, the map generation section 110 is capable of recognizing an object on the basis of the observation information and adding attribute information of the recognized object to the three-dimensional map.

Further, the map generation section 110 according to the present embodiment may perform a segmentation process on the basis of the observation information and add a result of the segmentation process to the three-dimensional map. In addition, the map generation section 110 is capable of generating an object surface and projecting texture on the basis of the result of the segmentation process, and generating a subject-surface-generated map or a texture-projected map.

In addition, the map generation section 110 has a function of generating a command that requests observation information related to a unit space on the basis of information related to inconsistency between a reference map and the unit space in the real world. At this time, the information related to the inconsistency may include reception of observation information from the information processing device 20. In other words, the information processing server 10 may generate the command in response to reception of observation information determined to have inconsistency by the information processing device 20.

In addition, the map generation section 110 is also capable of generating the command on the basis of prediction of inconsistency between the reference map and the unit space in the real world. The prediction of the inconsistency by the information processing server 10 will be described later.

### (Device communication section 120)

The device communication section 120 has a function of receiving observation information related to a unit space in the real world, the observation information being acquired from one or a plurality of sensors. In addition, the device communication section 120 has a function of transmitting the command generated by the map generation section 110, to at least one information processing device 20.

Here, the observation information may be information transmitted on the basis of information related to inconsistency between the reference map and the unit space in the real world. In other words, the observation information may be observation information transmitted by the information processing device 20 on the basis of detection of inconsistency, or observation information transmitted by the information processing device 20 in response to the command.

### <<2.4. Information processing device 20 according to present embodiment>>

Next, details of the information processing device 20 according to the present embodiment will be described. The information processing device 20 according to the present embodiment has a function of acquiring observation information observed by the mobile object 30. In addition, the information processing device 20 has a function of transmitting the acquired observation information to the information processing server 10, on the basis of information related to inconsistency between a reference map and a unit space in the real world. With reference to FIG. 5, the information processing device 20 according to the present embodiment includes a determination section 210, a movement setting section 220, and an observation information acquisition section 230, and a server communication section 240.

### (Determination section 210)

The determination section 210 has a function of determining consistency between a reference map and the real world on the basis of observation information acquired in a unit space in the real world. Specifically, the determination section 210 may determine the consistency by matching a feature point detected from the observation information acquired in the unit space against a feature point described in the reference map. At this time, the determination section 210 is capable of determining the consistency on the basis of a distance between the feature point described in the reference map and the feature point detected from the observation information of a partial region in a unit space determined to be matched with the reference map. Note that, details of inconsistency determination performed by the determination section 210 will be described later.

### (Movement setting section 220)

The movement setting section 220 has a function of setting a destination of the mobile object 30. Here, the movement setting section 220 according to the present embodiment may have a function corresponding to a type of the information processing device 20. For example, in the case where the information processing device 20 is the AI for automated driving, the movement setting section 220 is capable of moving the mobile object 30 to a unit space on the basis of coordinate information of the unit space included in a command issued from the information processing server 10.

In addition, for example, in the case where the information processing device 20 is the car navigation system, the movement setting section 220 is capable of changing a planned movement route of the mobile object 30 on the basis of coordinate information of the unit space included in the command. As described above, the functions of the movement setting section 220 may be appropriately configured in accordance with specifications of the information processing device 20 and the mobile object 30.

In addition, the movement setting section 220 may have a function of determining whether to change the destination of the mobile object in view of movement cost, safety assurance, or the like. Here, the movement cost may include a movement distance, a movement time, fuel cost, an expressway toll, and the like.

### (Observation information acquisition section 230)

The observation information acquisition section 230 has a function of acquiring observation information related to a unit space in the real world from one or a plurality of sensors. Here, the observation information may include depth information. For example, the depth information may be information obtained from an RGB-D camera or laser rangefinder included in the mobile object 30.

In addition, the observation information may include position information and attitude information. For example, the position information and the attitude information may be information obtained by GPS, Wi-Fi, a geomagnetic sensor, a barometric sensor, an acceleration sensor, a gyro sensor, a vibration sensor, or the like that are included in the mobile object 30.

### (Server communication section 240)

The server communication section 240 has a function of transmitting observation information acquired by the observation information acquisition section 230 to the information processing server 10. In addition, the server communication section 240 has a function of receiving a command issued from the information processing device 20.

Specifically, the server communication section 240 according to the present embodiment may transmit observation information acquired in a unit space to the information processing server 10, on the basis of information related to inconsistency between a reference map and the unit space in the real world. In other words, the server communication section 240 is capable of transmitting the observation information to the information processing server 10 on the basis of a determination result of consistency determination performed by the determination section 210.

In addition, the server communication section 240 according to the present embodiment may transmit observation information acquired in the unit space, on the basis of a command issued from the information processing server 10. At this time, the server communication section 240 is capable of transmitting observation information in response to the movement of the mobile object 30 to the unit space.

### <<2.5. Workflow of consistency determination by information processing device 20>>

Next, details of a workflow of consistency determination according to the present embodiment will be described. As described above, the determination section 20 according to the present embodiment is capable of determining consistency between a reference map and the real world on the basis of observation information acquired in a unit space in the real world.

At this time, the determination section 210 of the information processing device 20 may determine consistency between feature points by matching a feature point detected from the observation information acquired in the unit space against a feature point described in the reference map corresponding to the unit space where the observation information is acquired.

More specifically, the determination section 210 may determine the consistency on the basis of a distance between the feature point described in the reference map and the feature point detected from the observation information of a partial region in a unit space determined to be matched with the reference map.

In other words, in the case where it is detected that the distance between the feature points is large in the partial region while the observation information and the reference map are matched with each other as a whole, the determination section 210 is capable of determining that there is inconsistency between them.

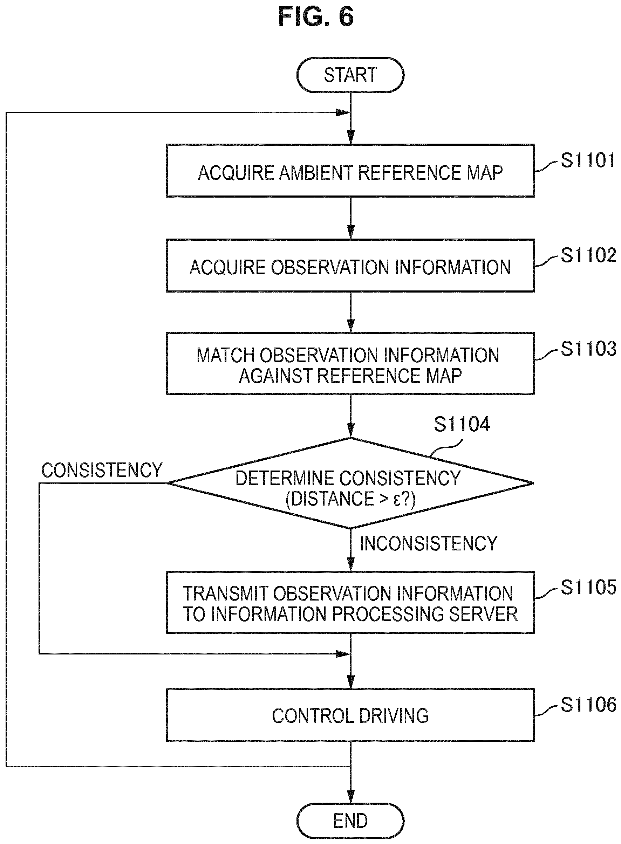

Next, with reference to FIG. 6, the workflow of consistency determination according to the present embodiment will be described. FIG. 6 is a flowchart illustrating the workflow of consistency determination according to the present embodiment. Note that, in the following description, an example in which the information processing device 20 has a function as the AI for automated driving will be described.

With reference to FIG. 6, the server communication section 240 first acquires a reference map related to a vicinity of a place where the mobile object 30 is traveling (S1101). At this time, the server communication section 240 may acquire the reference map on the basis of information acquired by the GPS or the like installed in the mobile object 30.

Next, the observation information acquisition section 230 acquires observation information observed by the mobile object 30 in a unit space in the real world (S1102). Here, the observation information may include an RGB-D image, laser rangefinder information, or information acquired by the GPS, Wi-Fi (registered trademark), a barometric sensor, an acceleration sensor, a gyro sensor, and a vibration sensor.

Next, the determination section 210 matches the observation information acquired in Step S1102 against the reference map acquired in Step S1101 (S1103). Details of the matching performed by the determination section 210 at this time will be described later.

Next, the determination section 210 determines consistency between the reference map and the observation information on the basis of a result of the matching performed in Step S1103 (S1104). As described above, in the case where it is detected that a distance between the feature points is large (distance > ε) in a partial region while the observation information and the reference map are matched with each other as a whole, the determination section 210 may determine that there is inconsistency between them. Note that, details of the consistency determination performed by the determination section 210 will be described later.

In the case where inconsistency between the reference map and the observation information is detected (INCONSISTENCY in S1104), the server communication section 240 transmits the observation information acquired in Step S1102 to the information processing server 10 (S1105).

On the other hand, in the case where consistency between the reference map and the observation information is confirmed (CONSISTENCY in S1104), the information processing device 20 ends the inconsistency determination related to the target unit space. In addition, at this time, the movement setting section 220 may control driving of the mobile object 30 such that the mobile object 30 moves to a next unit space (S1106). After the mobile object 30 moves to the next unit space, the determination section 210 repeats the process in Step S1101 to Step S1105.

The workflow of consistency determination according to the present embodiment has been described above. Note that, the example in which the server communication section 240 transmits observation information to the information processing server 10 when the determination section 210 detects inconsistency between the reference map and the observation information, has been described above. However, transmission of observation information according to the present embodiment is not limited thereto.

For example, according to the present embodiment, it is also possible for a passenger of the mobile object 30 to determine the consistency. In the case where the passenger visually recognizes inconsistency between a reference map and the real world, for example, the passenger is capable of performing manipulation for transmitting observation information to the information processing server 10. In this case, the information processing device 20 may include a user interface configured to receive the manipulation. As described above, the plurality of means related to transmission of observation information are included in the present embodiment. This enables collection of more pieces of information related to inconsistency.

### <<2.6. Details of consistency determination>>

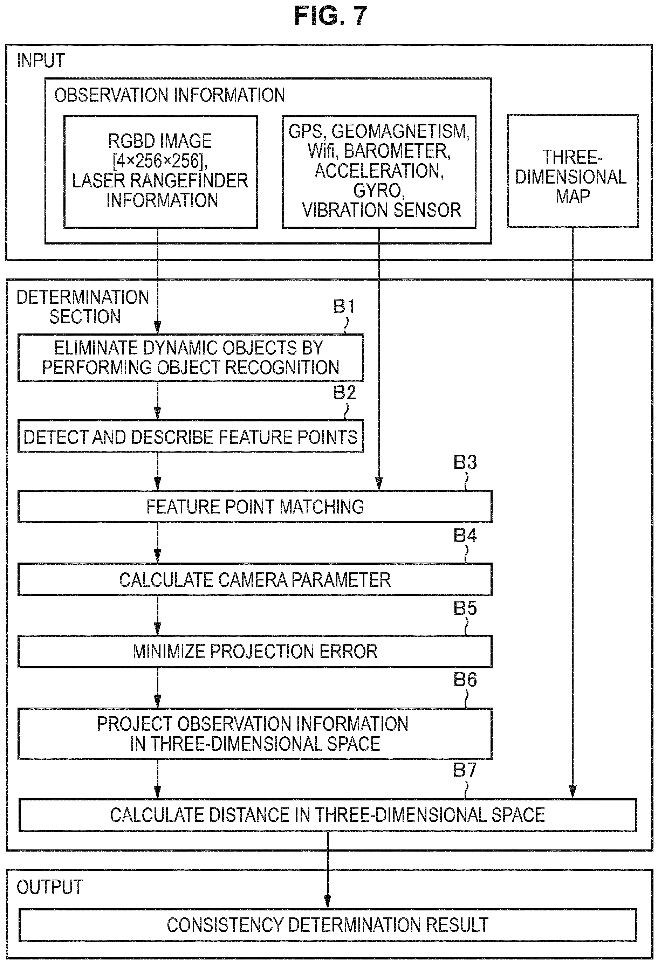

The workflow of consistency determination according to the present embodiment has been described above. Next, details of the consistency determination according to the present embodiment will be described. FIG. 7 is a conceptual diagram illustrating input/output related to the consistency determination according to the present embodiment. With reference to FIG. 7, it is understood that the determination section 210 is capable of outputting a result of determination of consistency between a reference map and the real world on the basis of input observation information. Note that, in FIG. 7, functions of the determination section 210 are provided with respective reference signs B1 to B7.

### (Elimination of dynamic object through object recognition)

With reference to FIG. 7, the determination section 210 has a function of eliminating dynamic objects from input information (Function B1). At this time, the input information may be an RGBD image, laser rangefinder information, or the like. In addition, the dynamic object may be an object that autonomously moves such as a pedestrian or a vehicle. Since the determination section 210 eliminates dynamic objects from input information, it is possible to extract landform information alone which is used for consistency determination.

At this time, for example, the determination section 210 may eliminate dynamic objects by performing region recognition or object recognition on the input information. At this time, it is possible to use a widely-used method as the region recognition and the object recognition. For example, the determination section 210 may perform the object recognition related to dynamic objects by checking the input information against feature information of the dynamic objects recorded in advance in a database. In addition, the determination section 210 is capable of eliminating dynamic objects on the basis of a result output from a learner having an object recognition ability.

### (Feature point detection)

In addition, the determination section 210 has a function of detecting feature points on the basis of the RGBD image from which dynamic objects are eliminated, and describing the feature points (Function B2). The RGBD image is output from the function B1. At this time, for example, the determination section 210 may detect the feature points by using the scale-invariant feature transform (SIFT), speeded up robust features (SURF), or the like. In addition, for example, it is also possible for the determination section 210 to use Harris Corner Detector.

### (Feature point matching)

In addition, the determination section 210 also has a function of matching feature points against each other, on the basis of description of the feature points related to the plurality of RGBD images output from the function B2 (Function B3). At this time, the determination section 210 matches the feature points against each other, the feature points having a correspondence relation between the plurality of RGBD images. At this time, the determination section 210 may perform matching corresponding to the method that has been used for detecting the feature points. For example, in the case where the SIFT or the SURF is used for detecting the feature points, the determination section 210 may perform the matching on the basis of feature vectors related to the detected feature points.

In addition, in the feature point mapping, the determination section 210 may use sensor information that is included in the observation information and acquired from GPS, a geomagnetic sensor, Wi-Fi, a barometric sensor, an acceleration sensor, a gyro sensor, and a vibration sensor. The determination section 210 is capable of increasing efficiency of the feature point mapping by using position information or attitude information that are roughly calculated from the sensor information.

### (Camera parameter calculation)

In addition, the determination section 210 also has a function of calculating three-dimensional coordinates of feature points on the basis of matching information output from the function B3, and calculating a camera parameter corresponding to each of the RGBD images from the three-dimensional coordinates of the feature points (Function B4). Here, the camera parameter may include various internal parameters such as a vector of a degree of freedom of the camera. For example, the camera parameter according to the present embodiment may be positional coordinates (X, Y, Z) of the camera and rotation angles (Φx, Φy, Φz) of the respective coordinate axes. In addition, for example, the camera parameter according to the present embodiment may include an internal parameter such as a focal length, f-number, or a shear factor.

At this time, the determination section 210 may continuously calculate relative values such as positions of a feature point in consecutive frames (RGBD image), a position vector between cameras, a triaxial rotation vector of a camera, and a vector between a feature point and respective camera positions. The determination section 210 is capable of calculating the above by solving an epipolar equation based on epipolar geometry.

In addition, in calculation of the camera parameter, the determination section 210 is capable of improving efficiency of the calculation of the camera parameter by using position information or attitude information that are roughly calculated from the sensor information.

### (Projection error minimization)

In addition, the determination section 210 has a function of minimizing a projection error on the basis of the camera parameter output from the function B4 (Function B5). Specifically, the determination section 210 performs a statistical process of minimizing position distribution of respective feature points and respective camera parameters.

At this time, the determination section 210 is capable of minimizing a projection error by detecting a feature point having a large error and deleting the feature point. For example, the determination section 210 may estimate an optimum solution of the least squares method by using the Levenberg-Marquardt method. Accordingly, the determination section 210 is capable of finding a camera position with a converged error, a camera rotation matrix, and three-dimensional coordinates of a feature point.

### (Three-dimensional space projection of observation information)

In addition, the determination section 210 has a function of projecting observation information in a three-dimensional space on the basis of three-dimensional coordinates of feature points and a camera parameter having a minimized error (Function B6). The camera parameter is output from the function B5 In other words, the determination section 210 is capable of obtaining a three-dimensional map (hereinafter, also referred to as an observation point map) in which feature points related to image information acquired from the mobile object 30 are projected in a three-dimensional space.

### (Distance calculation in three-dimensional space)

In addition, the determination section 210 has a function of calculating a distance between feature points in a three-dimensional space on the basis of information regarding three-dimensional space projection output from the function B6. In other words, the determination section 210 calculates a distance between a feature point detected from observation information and a feature point described in a reference map in a three-dimensional space. Here, the determination section 210 may determine that there is inconsistency between the reference map and the real world, in the case where the calculated distance is a predetermined threshold or more.

At this time, the determination section 210 may determine consistency on the basis of a nearest neighbor point error. For example, the determination section 210 is capable of calculating distances r between respective feature points extracted from observation information and a feature point that is on a reference map and that is nearest to the respective feature points, and determining that there is inconsistency when an average for the distances r exceeds a threshold ε.

In addition, for example, the determination section 210 may determine consistency by using an identical landform determiner. Here, the identical landform determiner may be a learner that has acquired an ability to determine whether landforms are the same, from deep learning or the like. Specifically, the identical landform determiner may have a function of determining whether pieces of landform information of a three-dimensional space are identical or not identical, on the basis of an input reference map and observation point map. In this case, the determination section 210 is capable of determining that there is inconsistency when an output value from the identical landform determiner exceeds a predetermined threshold ε.

In addition, for example, the determination section 210 may determine consistency on the basis of a result of two-dimensional or three-dimensional object recognition. Here, the object recognition may be information output from a learner that has acquired an ability to recognize objects through deep learning or the like. In this case, the determination section 210 compares object recognition information output from the learner with pre-registered object information on a reference map. At this time, the determination section 210 is capable of determining that there is inconsistency when the object recognition result output from the learner is different from the pre-registered object information.

The consistency determination according to the present embodiment has been described above. As described above, the information processing device 20 according to the present embodiment is capable of determining consistency between a reference map and the real world on the basis of observation information acquired from the mobile object 30. By using the above-described functions of the information processing device 20 according to the present embodiment, it is possible to automatically determine inconsistency between a reference map and the real world, and effectively collect observation information related to the inconsistency in unit spaces.

### <<2.7. Workflow related to generation of new partial map>>

Next, details of generation of a new partial map according to the present embodiment will be described. The information processing server 10 according to the present embodiment is capable of transmitting a command that requests observation information related to a unit space to a plurality of information processing devices 20, on the basis of information related to inconsistency between a received reference map and the unit space in the real world. In addition, on the basis of pieces of observation information acquired from the plurality of information processing devices 20, the information processing server 10 according to the present embodiment is capable of generating a new three-dimensional partial map related to the unit space where the pieces of observation information are observed.

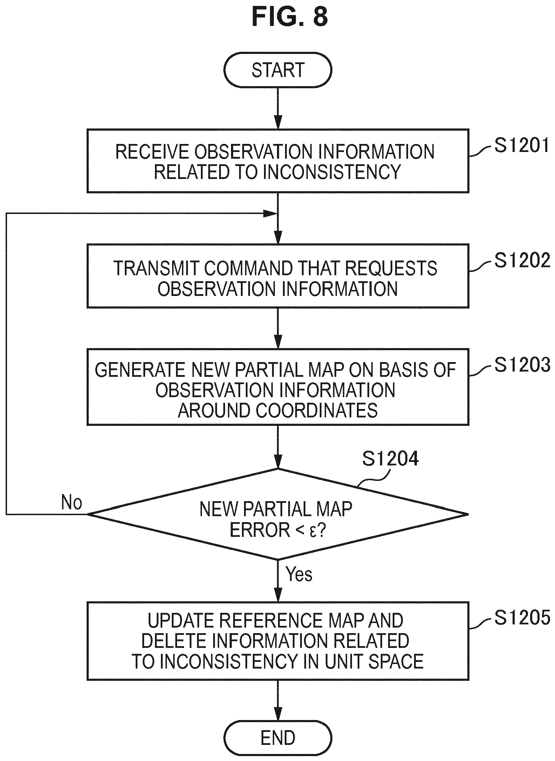

Next, details of a workflow of the generation of the new partial map according to the present embodiment will be described. FIG. 8 is a flowchart illustrating the workflow of new partial map generation according to the present embodiment.

With reference to FIG. 8, the device communication section 120 of the information processing server 10 first receives pieces of observation information related to inconsistency from the information processing devices 20 (S1201).

Next, the device communication section 120 transmits a command that requests observation information related to a unit space (S1202). At this time, the command may be a command generated by the map generation section 110 on the basis of the observation information received in Step S1201.

Next, the map generation section 110 generates a new partial map related to the unit space on the basis of pieces of observation information of the unit space transmitted from the plurality of information processing devices 20 (S1203). At this time, the pieces of observation information may be pieces of information transmitted from the information processing devices 20 on the basis of the command transmitted by the device communication section 120 in Step S1202. Note that, generation of the new partial map performed by the map generation section 110 will be described later.

Next, the map generation section 110 determines whether there is an error in the new partial map generated in Step S1203 (S1204). At this time, the map generation section 110 may determine whether there is an error by using a widely-used method. For example, the map generation section 110 is capable of determining whether there is an error in the new partial map on the basis of a method used for bundle adjustment. The map generation section 110 may define reliability of a feature point in a three-dimensional space obtained from a plurality of observation points, by using their distances. The map generation section 110 may determine the error of the new partial map when feature points related to more than a predetermined number of observation points are within a predetermined error range.

Here, in the case where an error of the generated new partial map is less than a predetermined threshold ε (Yes in S1204), the map generation section 110 determines that the generated new partial map is completed, and updates the reference map related to the target unit space (S1205). At this time, the map generation section 110 deletes information related to inconsistency in the target unit space, and ends the process related to new partial map generation. In addition, at this time, the map generation section 110 may save a change history related to the reference map.

On the other hand, in the case where the error of the generated new partial map is the predetermined threshold ε or more (No in S1204), the map generation section 110 may determine that the generated new partial map has low accuracy, and return to Step S1202 to collect more pieces of observation information. In this case, the map generation section 110 may repeat the process from Step S1202 to Step S1204 until the error of the generated new partial map gets smaller than the predetermined threshold ε.

The workflow of generation of the new partial map according to the present embodiment has been described above. As described above, the information processing server 10 according to the present embodiment is capable of requesting collection of observation information related to a corresponding unit space, on the basis of pieces of observation information that relate to inconsistency and that are transmitted from the information processing devices 20. In addition, on the basis of pieces of observation information received from the plurality of information processing devices 20, the information processing server 10 according to the present embodiment is capable of generating a new three-dimensional partial map related to the unit space, and updating the reference map.

By using the above-described functions of the information processing server 10 according to the present embodiment, it is possible to automatically collect observation information related to inconsistency and update a reference map dynamically and continuously. This enables detecting change in landforms in the real world more quickly, and keeping the reference map in a state closer to the real world situation.

In addition, the information processing server 10 according to the present embodiment may estimate change in a landform of a unit space from the change history of the reference map saved in Step S1205. Specifically, the information processing server 10 is capable of finding periodicity or regularity related to change in landforms from the change history, and estimating change in the landforms depending on seasons, time slots, and the like. By using the above-described estimation function of the information processing server 10 according to the present embodiment, it is possible to provide information closer to situations in the real world.

Note that, the example in which a reference map is updated on the basis of errors in a generated new partial map has been described above. However, update of a reference map according to the present embodiment is not limited thereto. The method for updating a reference map according to the present embodiment may be appropriately modified in accordance with change in landforms, traffic amounts, or the like. For example, in the case where a magnitude of detected inconsistency is large, in other words, in the case where landforms in the real world changes drastically, the information processing server 10 may prioritize time to release of a reference map over accuracy of the reference map.

In addition, it is also possible for the information processing server 10 to prioritize release of a reference map in the case where there is inconsistency related to a unit space with a lot of traffic. In such a case, it is possible to ensure safety of mobile objects 30 including autonomous vehicles, by releasing information related to change in landforms as soon as possible. In addition, at this time, the information processing server 10 is capable of continuously collecting observation information related to a target unit space and improving accuracy of the new partial map even after releasing the reference map.

In addition, although the example of automatically updating a reference map has been described above with reference to FIG. 8, the reference map may be updated after receiving user's final confirmation. Since the user checks quality of the generated reference map, it is possible to enhance reliability of the reference map more. In addition, necessity and non-necessity of the user's final confirmation may be switched in accordance with its setting. By switching necessity and non-necessity of the user's final confirmation through the setting, for example, it is possible for the user to check only update of a reference map related to important areas. The method for generating a new partial map according to the present embodiment may be appropriately modified in accordance with a specification or operation.

### <<2.8. Command transmission based on inconsistency prediction>>

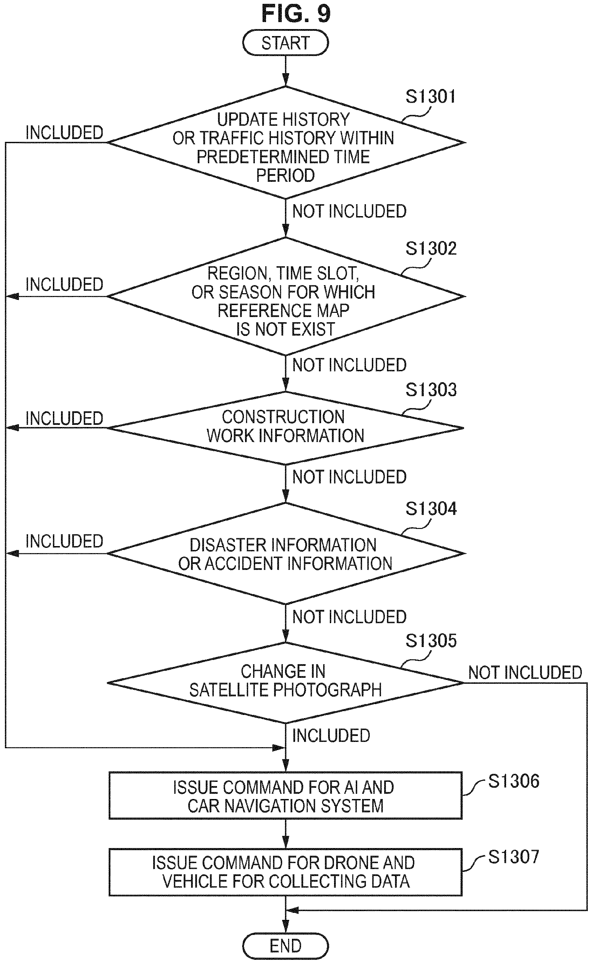

With reference to FIG. 8, the example in which the information processing server 10 transmits a command that requests observation information (hereinafter, also simply referred to as a command) in response to reception of observation information related to inconsistency, has been described above. On the other hand, it is also possible for the information processing server 10 according to the present embodiment to transmit the command on the basis of inconsistency prediction. FIG. 9 is a flowchart illustrating command transmission performed by the information processing server 10 on the basis of inconsistency prediction.

With reference to FIG. 9, the map generation section 110 in the information processing server 10 may make a determination related to command generation on the basis of an update history or a traffic history of a reference map of a unit space within a predetermined time period (S1301).

In the case where the reference map related to the unit space has not been updated for a long time, there is a possibility that inconsistency occurs between the reference map and landforms in the real world. In addition, in the case where the unit space has less traffic, it is assumed that delay in detection of inconsistency occurs even if there is the inconsistency between the reference map and the landforms in the real world. Therefore, the map generation section 110 generates a command while using an update history or a traffic history of a reference map of a unit space within a predetermined time period as a trigger. Accordingly, it is possible to enhance probability of detecting inconsistency and generating a highly accurate reference map.

At this time, for example, it is also possible for the map generation section 110 to generate a command for intensively collecting observation information related to highways and main roads having relatively large traffic volumes in a low-traffic region. In addition, for example, the map generation section 110 may generate a command for intensively collecting observation information of roads frequently used by the mobile object 30. Note that, for example, the roads may include a road dedicated to autonomous vehicles. Since the map generation section 110 generates commands as described above, it is possible to increase frequency of update in the reference map related to the important area.

In addition, the map generation section 110 may make a determination related to command generation on the basis of data of the reference map owned by itself (S1302). Specifically, the map generation section 110 is capable of generating a command on the basis of a region, time slot, season, or the like for which the reference map is not exist.

By generating a command on the basis of data of reference maps owned by the map generation section 110, it is possible to efficiently collect observation information related to unit spaces whose reference maps have not been generated yet. In addition, the reference maps according to the present embodiment may be generated in accordance with time slots, seasons, or the like. In this case, a plurality of reference maps are generated for a single unit space. Therefore, it is possible to provide information closer to situations in the real world.

In addition, the map generation section 110 may make a determination related to command generation on the basis of construction work information that has been collected (S1303). The construction work information may be information input by users, or may be information automatically collected by the information processing server 10 from other devices.

A unit space where the construction work goes on has a high possibility that inconsistency occurs between a reference map before the construction and a landform in the real world. Therefore, the map generation section 110 generates a command by using the construction work information as a trigger. Accordingly, it is possible to keep the reference map in a state closer to a latest landform in the real world.

In addition, the map generation section 110 may make a determination related to command generation on the basis of disaster information, accident information, criminal information, weather information, or the like that has been collected (S1304). The disaster information, accident information, and weather information may be information input by users, or may be information automatically collected by the information processing server 10 from other devices.

A unit space where a disaster or an accident has happened or a unit space predicted to have abnormal weather has a high possibility that inconsistency occurs between a reference map before the disaster, accident, or abnormal weather and a landform in the real world. Therefore, the map generation section 110 generates a command by using the disaster information, accident information, or the like as a trigger. Accordingly, it is possible to keep the reference map in a state closer to a latest landform in the real world.

In addition, the map generation section 110 may make a determination related to command generation when detecting change in a satellite photograph (S1305). The map generation section 110 is capable of detecting change in a plurality of satellite photographs on the basis of time information and coordinate information related to the plurality of satellite photographs. In addition, such changes may be detected by another device.

A unit space where change is detected by using the satellite photographs has a high possibility that inconsistency occurs between a reference map and a landform in the real world. Therefore, the map generation section 110 generates a command by using the change in the satellite photographs as a trigger. Accordingly, it is possible to keep the reference map in a state closer to a latest landform in the real world.

In the case where any of the conditions described in Step S1301 to S1305 is satisfied, the map generation section 110 generates a command that requests observation information. In addition, at this time, the device communication section 120 transmits the command to an information processing devices 20 including the AI for automated driving and the car navigation system (S1306).

Next, the device communication section 120 transmits the command to an information processing device 20 mounted on a drone for collecting data or a vehicle for collecting data (S1307).

The details of command transmission based on inconsistency prediction according to the present embodiment have been described above. As described above, the information processing server 10 according to the present embodiment is capable of predicting inconsistency between a reference map and the real world on the basis of various conditions, and transmitting a command that requests observation information. By using the above-described functions of the information processing server 10 according to the present embodiment, it is possible to increase a possibility of detecting the inconsistency, and keep the reference map in a state closer to a latest landform in the real world.

In addition, it is also possible for the information processing server 10 according to the present embodiment to transmit the command on the basis of learning related to recency assurance of a reference map. In this case, the information processing server 10 may regard guiding of the mobile object 30 to a target unit space based on a command, as "control" (action), and perform enforced learning or the like related to the control. At this time, for example, the information processing server 10 may regard early detection of inconsistency as a reward, or may regard the number of pieces of observation information related to unexpected inconsistency received from the mobile object 30, as a reward. By using the above-described functions of the information processing server 10 according to the present embodiment, it is possible to efficiently detect inconsistency and assure recency of a reference map.

Note that, although not illustrated in FIG. 9, the information processing server 10 may determine whether to transmit a command in accordance with the type of the mobile object 30. For example, in the case where the information processing server 10 generates a command by using the disaster information or the accident information as a trigger, the device communication section 120 may limit a transmission destination of the command to the drone or vehicle for collecting data. In a unit space where a disaster or an accident has occurred, it is necessary to secure safety. Therefore, limitation of the transmission destination of the command from the information processing server 10 enables prevention of a secondary disaster.

In addition, the information processing server 10 may control a transmission destination of a command on the basis of information other than the disaster information and the accident information. For example, the information processing server 10 may control the transmission destination of the command on the basis of coordinates or importance levels of unit spaces, weather information, traffic information including traffic jam information, or the like. Note that, at this time, the information processing server 10 is capable of controlling not only a type of a mobile object 30 to which the command will be transmitted, but also the number of information processing devices 20 serving as transmission destinations. Since the information processing server 10 appropriately controls the number of information processing devices 20 serving as transmission destinations, it is possible to flexibly respond in accordance with a target unit space.

In addition, the command may be issued on the basis of user manipulation. In this case, the user may be capable of arbitrarily set a unit space where observation information will be collected. The information processing server 10 is capable of generating a command on the basis of information input by the user, and transmitting the command to an information processing device.

In addition to control performed by the information processing server 10 with regard to the command transmission destination, it is also possible to determine whether the information processing device 20 that has received the command obeys the command. In other words, the movement setting section 220 in the information processing device 20 is capable of determining whether to set a unit space as a movement destination on the basis of coordinate information of the unit space included in the command.

In this case, the movement setting section 220 may make a determination as described above in view of movement cost to the unit space, safety assurance, or the like. Note that, the movement setting section 220 may make a determination as described above on the basis of disaster information, accident information, weather information, satellite photograph information, traffic information including traffic jam information or the like that has been acquired, for example. Here, the movement cost may include a movement distance, a movement time, fuel cost, an expressway toll, and the like.

### <<2.9. Driving control based on inconsistency prediction>>

The command transmission based on inconsistency prediction according to the present embodiment has been described above. Next, details of driving control based on inconsistency prediction according to the present embodiment will be described. The information processing device 20 according to the present embodiment may control driving of the mobile object 30 on the basis of a result of inconsistency prediction performed by the information processing server 10. More specifically, the movement setting section 220 in the information processing device 20 is capable of changing a driving mode of the mobile object 30 on the basis of recency of a reference map. In other words, the movement setting section 220 functions as a control section configured to change a driving control mode on the basis of a degree of the inconsistency.

As described above, with regard to a unit space predicted to have inconsistency, it is assumed that a reference map is different from a landform of the real world. In other words, it can be said that recency of a reference map may be low in the unit space predicted to have inconsistency. Therefore, it is possible to achieve safer automated driving when the information processing device 20 changes a driving mode related to the mobile object 30 in the unit space whose reference map has low recency.

At this time, as described above, the information processing device 20 may change the driving mode on the basis of an update history of a reference map related to a unit space, information regarding regions, seasons, time slots for which reference maps are not exist. In addition, the information processing device 20 is capable of changing the driving mode on the basis of the construction work information, disaster information, accident information, criminal information, traffic crackdown information, or the like. In addition, the information processing device 20 may change the driving mode on the basis of satellite photograph information, a usage history of reference maps, a traffic history, or the like. For example, the information processing device 20 is also capable of changing the driving mode on the basis of a traveling history in a unit space without detecting any inconsistency.

Next, a specific example of the driving mode controlled by the information processing device 20 will be described. As described above, the information processing device 20 according to the present embodiment is capable of changing a driving mode related to the mobile object 30 on the basis of inconsistency prediction. For example, it is possible for the information processing device 20 to select a mode in which safety is prioritized, in the case where the inconsistency prediction indicates a high degree of inconsistency. For example, the information processing device 20 is capable of selecting the mode by changing a control algorithm or a coefficient to be used.

Specifically, the information processing device 20 may select a standard mode or a careful driving mode in accordance with various driving control abilities related to the AI for automated driving. At this time, the information processing device 20 is also capable of increasing frequency of information communication with various servers including the information processing server 10, by slowing down a traveling speed, for example.

In addition, the information processing device 20 may propose to switch the mode from an automated driving mode to a mode in which a driver manually drives the vehicle or to a mode in which the driver merely supports driving. In addition, the information processing device 20 may perform control to notify ambient pedestrians and traveling vehicles of its self-location. At this time, for example, the information processing device 20 may perform control to beep the horn, or may transmit information related to the self-location to ambient traveling vehicles.

In addition, the information processing device 20 is also capable of controlling driving such that it becomes possible to recognize details of states and responses of the ambient pedestrians and traveling vehicles. For example, when entering an intersection, the information processing device 20 may slow down its speed or stop in a state where a front portion of a vehicle body of the mobile object 30 protrudes, recognize details of states of pedestrians and traveling vehicles, and then performs subsequent driving control.

In addition, it is also possible for the information processing device 20 to perform control to make a detour to a unit space having a reference map with a low degree of inconsistency. In other words, the information processing device 20 is capable of selecting a route while prioritizing a unit space having a reference map with high reliability.

The driving control based on inconsistency prediction according to the embodiment has been described above. As described above, the information processing device 20 according to the present embodiment is capable of changing a driving mode related to the mobile object 30 on the basis of inconsistency prediction. By using the above-described functions of the information processing device 20 according to the present embodiment, it is possible to achieve safer driving control with regard to the mobile object 30.

Note that, the case where the information processing device 20 changes a driving mode related to the mobile object 30 on the basis of inconsistency prediction, has been described above. In addition, the information processing device 20 may additionally change a method or a process procedure related to collection of observation information or self-localization. In other words, the information processing device 20 according to the present embodiment is capable of performing appropriate control depending on recency of a reference map.

### <<2.10 Details of three-dimensional map generation>>

Next, details of three-dimensional map generation according to the present disclosure will be described. As described above, the map generation section 110 in the information processing server 10 according to the present embodiment is capable of generating a reference map on the basis of observation information received from the information processing devices 20. At this time, the map generation section 110 is capable of generating a primary map and a secondary map. The primary map includes a feature point map and an observation point map based on the observation information, and the secondary map is a map obtained by adding additional information to the primary map. Here, the secondary map may include an object recognition map, a segmentation map, an object-attribute-added map, an object-surface-generated map, a texture-projected map, and the like.

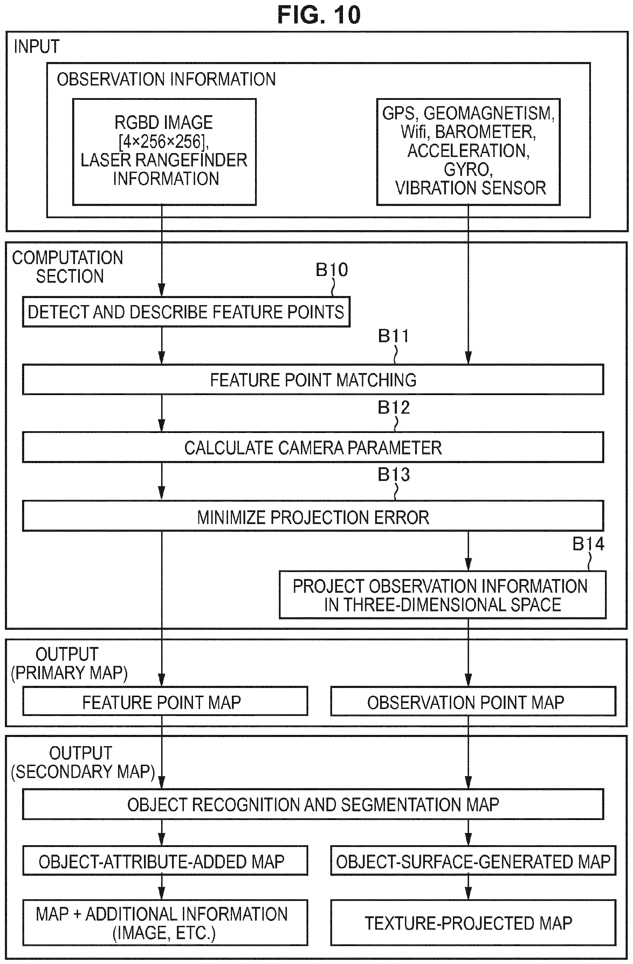

FIG. 10 is a conceptual diagram illustrating input/output related to three-dimensional map generation according to the present embodiment. With reference to FIG. 10, it is understood that the map generation section 110 is capable of generating a three-dimensional map on the basis of input observation information. Note that, in FIG. 10, functions of the map generation section 110 are provided with respective reference signs B10 to B14. Here, techniques used by the functions B10 to B14 are similar to the techniques used by the functions B2 to B6 of the determination section 210 described with reference to FIG. 7. Therefore, the repeated description will be omitted.

### (Generation of primary map)

As described above, the map generation section 110 according to the present embodiment is capable of generating a three-dimensional map on the basis of observation information that has been received. Here, the map generation section 110 may perform processes related to feature point detection (Function B10), feature point matching (Function B11), camera parameter calculation (Function B12), and projection error minimization (Function B13), on the plurality of pieces of observation information that have been received. By performing the above-described series of processes, the map generation section 110 is capable of generating a three-dimensional feature point map of a unit space.

In addition, the map generation section 110 is also capable of generating an observation point map based on the pieces of observation information, by projecting the pieces of observation information in a three-dimensional space (Function B14). Here, the observation point map may be a three-dimensional map in which feature points related to image information acquired by the mobile object 30 are projected in the three-dimensional space.

### (Generation of secondary map)

In addition, 110 according to the present embodiment, it is also capable of generating a secondary map by adding additional information to the generated primary map. Specifically, the map generation section 110 is capable of generating a segmentation map and an object recognition map obtained by adding object recognition information to the generated primary map.

Here, the map generation section 110 is capable of generating the secondary map to which more useful information is added, by performing an additional process on the object recognition map or the segmentation map generated as the secondary map.

For example, the map generation section 110 may generate an object-attribute-added map to which attribute information of recognized objects is added. In addition, the map generation section 110 may generate a three-dimensional map to which other additional information is added. Here, the additional information may include image information, text information, sound information, or the like, for example. Details of the object-attribute-added map according to the present embodiment will be described later.

In addition, for example, the map generation section 110 may obtain the object-surface-generated map by generating object surfaces on the basis of the segmentation process. In addition, the map generation section 110 is capable of generating the texture-projected map by projecting texture on the generated object surfaces. Note that, details of the object-surface-generated map and texture-projected map according to the present embodiment will be described later.

As described above, the information processing server 10 according to the present embodiment is capable of generating the primary map and the secondary map on the basis of the plurality of pieces of observation information received from the information processing devices 20. By using the above-described functions of the information processing server 10, it is possible to generate various three-dimensional maps depending on the specifications of the mobile objects 30 and utilization purposes of the maps.

### <<2.11 Object-surface-generated map and texture-projected map>>

Next, details of the object-surface-generated map and texture-projected map according to the present embodiment will be described. The map generation section 110 according to the present embodiment is capable of generating object surfaces on the basis of a segmentation map obtained by performing the segmentation process on a primary map. In addition, the map generation section 110 is capable of projecting texture on the generated object surfaces.

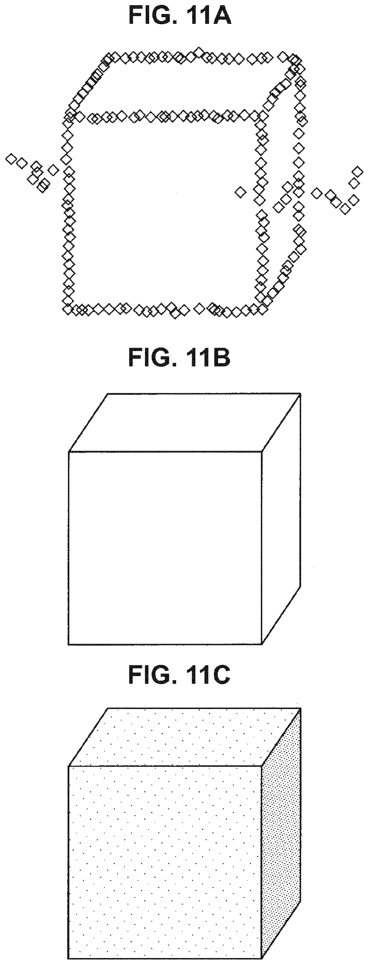

FIG. 11A to 11C are illustration diagrams illustrating the object surface generation and the texture projection according to the present embodiment. Here, FIG. 11A is an illustration example of an object included in a primary map generated by the map generation section 110. With reference to FIG. 11A, the object in the primary map is illustrated as a set of feature points.

In addition, the object in FIG. 11B is an illustration example in which the segmentation process and the object surface generation are performed on the primary map illustrated in FIG. 11A. At this time, the map generation section 110 is capable of performing the segmentation process and the object surface generation by using a widely-used method. For example, the map generation section 110 may perform the segmentation process by using graph cuts, region growing, or the like. In addition, the segmentation process may be performed by a learner that has acquired a segmentation ability through learning.

In addition, the map generation section 110 may generate object surfaces by using a technology used for polygon generation or dense stereo matching. In addition, the object surface generation may be performed by a learner that has acquired an ability to generate object surfaces through learning.

FIG. 11C is an illustration diagram illustrating an example of the object in which texture is projected on the generated object surfaces. For example, the map generation section 110 may project texture on the basis of color information extracted from image information included in observation information, or characteristic information of a recognized object. At this time, the map generation section 110 may use a method used for texture mapping. In addition, the texture projection may be performed by a learner that has acquired a texture projection ability through learning.

The object-surface-generated map and texture-projected map according to the present embodiment have been described above. As described above, the map generation section 110 according to the present embodiment is capable of generating object surfaces and projecting texture on the basis of observation information that has been received. By using the above-described functions of the information processing server 10 according to the present embodiment, it is possible to provide three-dimensional maps with higher values.

### <<2.12. Object-attribute-added map according to present embodiment>>

Next, details of the object-attribute-added map according to the present embodiment will be described. As described above, the map generation section 110 according to the present embodiment is capable of generating an object-attribute-added map on the basis of the generated primary map and a result of object recognition.

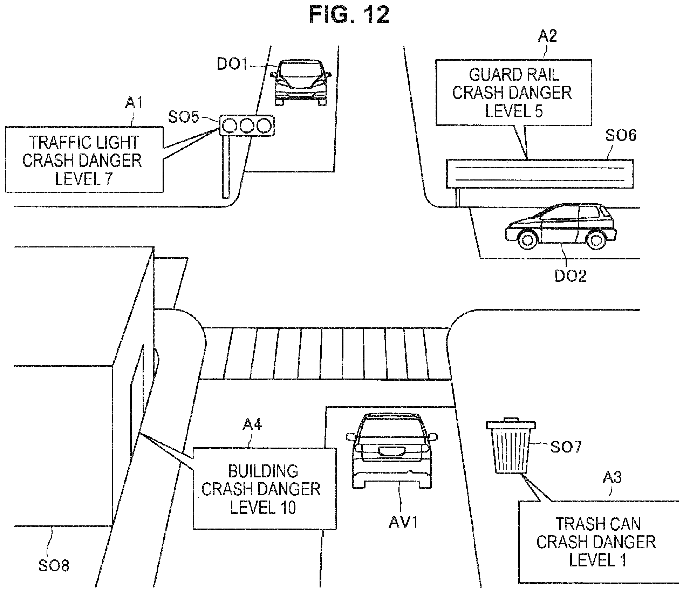

FIG. 12 is an illustration diagram of the object-attribute-added map according to the present embodiment. With reference to FIG. 12, it is understood that the object-attribute-added map according to the present embodiment includes attribute information A1 to attribute information A4 in addition to landform information including road information and static objects SO5 to SO8. Here, the attribute information A1 to the attribute information A4 may be additional information based on object recognition related to the static objects SO5 to SO8.

The additional information according to the present embodiment may include various kinds of information based on results of object recognition. In the example illustrated in FIG. 12, object names and danger levels at a time of impact are included as the additional information related to the static objects SO5 to SO8. Here, for example, the danger level may be an index indicating a degree of damage that will be inflicted on an autonomous vehicle if the autonomous vehicle clashes with a static object.

For example, in the example illustrated in FIG. 12, a trash can is illustrated as the static object SO7 and a crash danger level 1 is set as the corresponding attribute information A3. On the other hand, a crash danger level 10 is set as the attribute information A4 corresponding to the static object SO8 illustrated as a building.

Since the trash can is a movable object, it is assumed that the autonomous vehicle and the trash can will have small damage even if the autonomous vehicle crashes with the trash can. Therefore, the map generation section 110 sets the crash danger level 1 as the attribute information corresponding to the static object SO7 on the basis of the results of object recognition.

On the other hand, the building is a fixed object. If the autonomous vehicle crashes with the building, there is a high possibility that the autonomous vehicle and the building both receive serious damage. Therefore, the map generation section 110 sets the crash danger level 10 as the attribute information corresponding to the static object SO8 on the basis of the results of object recognition.

Here, the information processing device 20 mounted on the autonomous vehicle is capable of controlling the autonomous vehicle while referring to the crash danger levels included in the attribute information. For example, if a pedestrian or an oncoming vehicle runs out in front of the autonomous vehicle, sometimes the autonomous vehicle cannot avoid collision with a static object after avoiding the pedestrian or the oncoming vehicle, depending on circumstances. In such a case, the information processing device 20 is capable of increasing a possibility of suppressing the degree of damage by controlling the autonomous vehicle on the basis of crash danger levels of respective static objects included in the attribute information. Specifically, in the case of the example illustrated in FIG. 12, the information processing device 20 may perform control such that the autonomous vehicle heads to the static object SO7 which has the lower crash danger level. Note that, although not illustrated in the drawings, the information processing device 20 according to the present embodiment is capable of controlling driving on the basis of attribute information associated with landform information including roads. For example, the information processing device 20 may recognize landforms such as livers and cliffs from the attribute information, and control driving in view of damage that will be inflicted on the vehicle body and passengers when falling. By using the above-described functions of the information processing device 20 according to the present embodiment, it is possible to achieve safer driving control while reducing risk related to collision, fall, and the like.

The object-attribute-added map according to the embodiment has been described above. As described above, the map generation section 110 according to the present embodiment is capable of adding, to a three-dimensional map, various kinds of attribute information based on results of object recognition.

In addition, the information processing device 20 may perform control to cause a display device to display the object-attribute-added map. When the object-attribute-added map is displayed on the display device, the user is capable of visually recognizing attribute information of objects included in the three-dimensional map.

In addition, in this case, the map generation section 110 is capable of additionally including image information, text information, sound information, or the like into the generated object-attribute-added map. The user is capable of obtaining various kinds of information related to static objects in the real world by seeing the attribute information displayed on the display device.

### <3. Hardware configuration example>

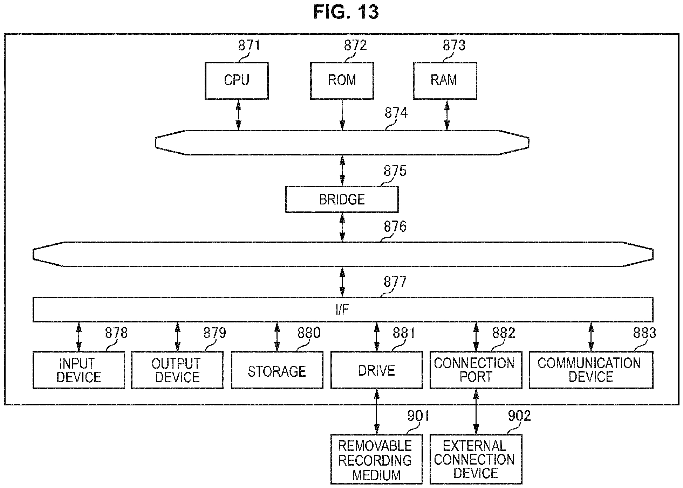

Next, a hardware configuration example that is common to the information processing server 10 and the information processing device 20 according to the present disclosure will be described. FIG. 13 is a block diagram illustrating the hardware configuration example of the information processing server 10 and the information processing device 20 according to the present disclosure. With reference to FIG. 13, for example, the information processing server 10 and the information processing device 20 each include a CPU 871, ROM 872, RAM 873, a host bus 874, a bridge 875, an external bus 876, an interface 877, an input device 878, an output device 879, a storage 880, a drive 881, a connection port 882, and a communication device 883. The hardware configuration illustrated here is a mere example. Some of the structural elements may be omitted. In addition, a structural element other than the structural elements illustrated here may be further added.

### (CPU 871)

The CPU 871 functions as an arithmetic processing device or a control device, for example, and controls entire operation or a part of the operation of each structural element on the basis of various programs recorded on the ROM 872, the RAM 873, the storage 880, or a removable recording medium 901.

### (ROM 872 and RAM 873)

The ROM 872 is a mechanism for storing a program to be loaded on the CPU 902 or data or the like used in an arithmetic operation. The RAM 873 temporarily or permanently stores, for example, a program to be loaded on the CPU 871 or various parameters or the like that arbitrarily changes in execution of the program.

### (Host bus 874, bridge 875, external bus 876, and interface 877)

The CPU 871, the ROM 872, and the RAM 873 are interconnected with each other, for example, via the host bus 874 capable of high-speed data transmission. In addition, the host bus 874 is connected, for example, via the bridge 875, to the external bus 876 having comparatively low data transmission speed. In addition, the external bus 876 is connected with various structural elements via the interface 877.

### (Input device 878)

For example, as the input device 878, a mouse, a keyboard, a touchscreen, a button, a switch, a lever, or the like is used. In addition, as the input device 878, a remote controller (hereinafter, referred to as a remote) capable of transmitting a control signal by using infrared or other radio waves is sometimes used.

### (Output device 879)

The output device 879 is, for example, a display device such as a cathode ray tube (CRT), an LCD, or an organic EL, an audio output device such as a speaker or headphones, or a device that can visually or audibly notify a user of acquired information such as a printer, a mobile phone, or a facsimile.

### (Storage 880)

The storage 880 is a device for storing various kinds of data. As the storage 880, for example, a magnetic storage device such as a hard disk drive (HDD), a semiconductor storage device, an optical storage device, a magneto-optical storage device, or the like is used.

### (Drive 881)

The drive 881 is a device for reading information recorded on the removable recording medium 901 and writing information to the removable recording medium 901. The removable storage medium 901 is, for example, a magnetic disk, an optical disk, a magneto-optical disk, a semiconductor memory, or the like.

### (Removable recording medium 901)

The removable recording medium 901 is, for example, a DVD medium, a Blu-ray (registered trademark) medium, an HD-DVD medium, various types of semiconductor storage media, or the like. Of course, the removable recording medium 901 may be, for example, an electronic device, an IC card, or the like on which a non-contact IC chip is mounted.

### (Connection port 882)

The connection port 882 is, for example, a port for connecting an external connection device 902 such as a Universal Serial Bus (USB) port, an IEEE934 port, a Small Computer System Interface (SCSI), an RS-232C port, or an optical audio terminal.

### (External connection device 902)

The external connection device 902 is, for example, a printer, a portable music player, a digital camera, a digital video camera, an IC recorder, or the like.

### (Communication device 883)

The communication device 883 is a communication device used for a connection to a network. The communication device 883 may be, for example, a communication card for a wired or wireless LAN, Bluetooth (registered trademark) or a wireless USB (WUSB), a rooter for optical communication, a rooter for an asymmetric digital subscriber line (ADSL), a modem for various kinds of communication, or the like.

### <4. Conclusion>

As described above, the information processing server 10 according to the present disclosure has a function of updating a reference map on the basis of observation information acquired in a unit space in the real world, the observation information being received from the information processing device 20. In addition, the information processing server 10 has a function of requesting the observation information from the plurality of information processing devices 20. In addition, the information processing device 20 according to the present disclosure has a function of acquiring observation information observed by a mobile object. In addition, the information processing device 20 has a function of transmitting the acquired observation information to the information processing server 10, on the basis of information related to inconsistency between a reference map and a unit space in the real world. According to this configuration, it is possible to dynamically update map information in response to change in the real world, with higher accuracy.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   an acquisition section configured to acquire observation information related to a unit space in a real world, from one or a plurality of sensors; and
   a communication section configured to transmit the observation information acquired in the unit space, on a basis of information related to inconsistency between a reference map and the unit space in the real world.
(2) The information processing device according to (1), further including
   a determination section configured to determine consistency between the reference map and the real world on a basis of the observation information acquired in the unit space,
   in which the communication section transmits the observation information acquired in the unit space, on a basis of a result of the determination made by the determination section.
(3) The information processing device according to (2),
   in which the determination section determines the consistency by matching a feature point detected from the observation information acquired in the unit space against a feature point described in the reference map.
(4) The information processing device according to (2) or (3),
   in which the determination section determines the consistency on a basis of a distance between the feature point described in the reference map and the feature point detected from the observation information in a partial region in a unit space determined to be matched with the reference map.
(5) The information processing device according to any of (1) to (4),
   in which the reference map is a three-dimensional map.
(6) The information processing device according to any of (1) to (5),
   in which the observation information includes depth information.
(7) The information processing device according to any of (1) to (6),
   in which the observation information includes at least any of position information and attitude information.
(8) The information processing device according to any of (1) to (7),
   in which the communication section receives a command issued by a server, and transmits the observation information acquired in the unit space, on a basis of the command.
(9) The information processing device according to (8), further including
   a movement setting section configured to set a destination of a mobile object.
(10) The information processing device according to (9) in which
   the movement setting section moves the mobile object to the unit space on a basis of coordinate information of the unit space included in the command, and
   the communication section transmits observation information acquired in the unit space, on a basis of the movement of the mobile object to the unit space.
(11) The information processing device according to (9), in which
   the movement setting section changes a planned movement route of the mobile object on a basis of coordinate information of the unit space included in the command, and
   the communication section transmits observation information acquired in the unit space, on a basis of movement of the mobile object to the unit space.
(12) The information processing device according to any of (9) to (11),
   in which the movement setting section determines whether to change the destination of the mobile object, on a basis of at least any of movement cost and safety assurance.
(13) An information processing device including:
   a communication section configured to receive observation information related to a unit space in a real world, the observation information being acquired from one or a plurality of sensors; and
   a map generation section configured to generate a reference map on a basis of the observation information,
   in which the observation information is transmitted on a basis of information related to inconsistency between the reference map and the unit space in the real world.
(14) The information processing device according to (13), in which
   the map generation section generates a command that requests observation information related to the unit space on a basis of the information related to the inconsistency, and
   the communication section transmits the command to at least one information processing device.
(15) The information processing device according to (14), in which
   the information related to the inconsistency includes reception of the observation information transmitted from the at least one information processing device, and
   the map generation section generates the command on a basis of the reception of the observation information transmitted from the at least one information processing device.
(16) The information processing device according to (14) or (15),
   in which the map generation section issues the command on a basis of prediction of inconsistency between the reference map and the unit space in the real world.
(17) The information processing device according to any of (13) to (16),
   in which the map generation section generates a new three-dimensional map on a basis of the observation information and updates the reference map.
(18) The information processing device according to (17),
   in which the map generation section recognizes an object on a basis of the observation information and adds attribute information of the recognized object to the three-dimensional map.
(19) The information processing device according to (17) or (18),
   in which the map generation section performs a segmentation process on a basis of the observation information and adds a result of the segmentation process to the three-dimensional map.
(20) An information processing device including:
   a reception section configured to receive information related to inconsistency between a reference map and a unit space in a real world; and
   a control section configured to change a driving control mode on a basis of a degree of the inconsistency.

### Reference Signs List

- 10: information processing server
- 110: map generation section
- 120: device communication section
- 20: information processing device
- 210: determination section
- 220: movement setting section
- 230: observation information acquisition section
- 240: server communication section
- 30: mobile object

## Claims

1. An information processing device comprising:
an acquisition section configured to acquire observation information related to a unit space in a real world, from one or a plurality of sensors; and
a communication section configured to transmit the observation information acquired in the unit space, on a basis of information related to inconsistency between a reference map and the unit space in the real world.

2. The information processing device according to claim 1, further comprising
a determination section configured to determine consistency between the reference map and the real world on a basis of the observation information acquired in the unit space,
wherein the communication section transmits the observation information acquired in the unit space, on a basis of a result of the determination made by the determination section.

3. The information processing device according to claim 2,
wherein the determination section determines the consistency by matching a feature point detected from the observation information acquired in the unit space against a feature point described in the reference map.

4. The information processing device according to claim 3,
wherein the determination section determines the consistency on a basis of a distance between the feature point described in the reference map and the feature point detected from the observation information in a partial region in a unit space determined to be matched with the reference map.

5. The information processing device according to claim 1,
wherein the reference map is a three-dimensional map.

6. The information processing device according to claim 1,
wherein the observation information includes depth information.

7. The information processing device according to claim 3,
wherein the observation information includes at least any of position information and attitude information.

8. The information processing device according to claim 1,
wherein the communication section receives a command issued by a server, and transmits the observation information acquired in the unit space, on a basis of the command.

9. The information processing device according to claim 8, further comprising
a movement setting section configured to set a destination of a mobile object.

10. The information processing device according to claim 9, wherein
the movement setting section moves the mobile object to the unit space on a basis of coordinate information of the unit space included in the command, and
the communication section transmits observation information acquired in the unit space, on a basis of the movement of the mobile object to the unit space.

11. The information processing device according to claim 9, wherein
the movement setting section changes a planned movement route of the mobile object on a basis of coordinate information of the unit space included in the command, and
the communication section transmits observation information acquired in the unit space, on a basis of movement of the mobile object to the unit space.

12. The information processing device according to claim 9,
wherein the movement setting section determines whether to change the destination of the mobile object, on a basis of at least any of movement cost and safety assurance.

13. An information processing device comprising:
a communication section configured to receive observation information related to a unit space in a real world, the observation information being acquired from one or a plurality of sensors; and
a map generation section configured to generate a reference map on a basis of the observation information,
wherein the observation information is transmitted on a basis of information related to inconsistency between the reference map and the unit space in the real world.

14. The information processing device according to claim 13, wherein
the map generation section generates a command that requests observation information related to the unit space on a basis of the information related to the inconsistency, and
the communication section transmits the command to at least one information processing device.

15. The information processing device according to claim 14, wherein
the information related to the inconsistency includes reception of the observation information transmitted from the at least one information processing device, and
the map generation section generates the command on a basis of the reception of the observation information transmitted from the at least one information processing device.

16. The information processing device according to claim 14,
wherein the map generation section issues the command on a basis of prediction of inconsistency between the reference map and the unit space in the real world.

17. The information processing device according to claim 13,
wherein the map generation section generates a new three-dimensional map on a basis of the observation information and updates the reference map.

18. The information processing device according to claim 17,
wherein the map generation section recognizes an object on a basis of the observation information and adds attribute information of the recognized object to the three-dimensional map.

19. The information processing device according to claim 17,
wherein the map generation section performs a segmentation process on a basis of the observation information and adds a result of the segmentation process to the three-dimensional map.

20. An information processing device comprising:
a reception section configured to receive information related to inconsistency between a reference map and a unit space in a real world; and
a control section configured to change a driving control mode on a basis of a degree of the inconsistency.
